# EUROPEAN PATENT APPLICATION

(11) **EP 1 585 161 A2**
(43) Date of publication of application: **12.10.2005**
(21) Application number: 05102835.5
(22) Date of filing: 11.04.2005
(51) Int. Cl.: H01J 17/49

(54) **A Plasma Display Panel**

(30) Priority: 09.04.2004 KR 2004024510
(71) Applicant: SAMSUNG ELECTRONICS CO., LTD., Gyeonggi-do 442-742 (KR)
(72) Inventor: Min, Jong-sul, Taean-eup, Hwaseong-si, Gyeonggi-do (KR); Hong, Chang-wan, Yongin-si, Gyeonggi-do (KR); Kim, Young-sun 718-204 Salgugol Dongah Apt., Suwon-si, Gyeonggi-do (KR); Han, Young-soo 551-1803 Shinnamusil Jinheung Apt., Suwon-si Gyeonggi-do, (KR)
(74) Representative: Geary, Stuart Lloyd

(57) **Abstract**

Disclosed is a plasma display panel comprises a lower substrate and an upper substrate, spaced apart by a predetermined distance to define a discharge space therebetween; a plurality of barrier ribs between the lower substrate and the upper substrate, partitioning the discharge space to form a plurality of discharge cells; a plurality of address electrodes formed in parallel on the upper surface of the lower substrate; a plurality of discharge electrodes formed at an angle to the address electrodes on the lower surface of the upper substrate; a fluorescent layer formed on the inner walls of the discharge cells; and an external light shielding member formed on the upper substrate, preventing external light from entering the discharge cells, wherein the lower surface of the upper substrate has a plurality of cylindrical lenses, corresponding to each of the discharge cells.

## Description

The present invention relates to a plasma display panel comprising a discharge cell operable to emit light.

A plasma display panel (PDP) is an apparatus which forms an image using an electrical discharge. PDPs have superior performance in terms of brightness and viewing angle and are thus popular. In PDPs, DC or AC voltages applied to electrodes cause a gas discharge between the electrodes. Ultraviolet rays generated by the discharge excite a fluorescent material, which emits a visible light. PDPs are therefore classified as either DC or AC types depending on the voltage applied to the electrodes.

The DC type PDP has a structure where all electrodes are exposed to the discharge space, and charges move directly between the electrodes. The AC type PDP has a structure where at least one electrode is covered with a dielectric layer so charges do not move directly between the corresponding electrodes but, instead, discharge is performed between wall charges.

Also, PDPs may be classified as a facing discharge type or a surface discharge type. This classification is dependent upon the arrangement of the electrodes. The facing discharge type PDP has a structure where a pair of sustain electrodes are formed respectively on an upper substrate and a lower substrate, and discharge occurs perpendicular to the substrate. The surface discharge type PDP has a structure where a pair of sustain electrodes are formed on the same substrate, and discharge occurs parallel to the substrate.

The facing discharge type PDP has a high luminous efficiency, but a disadvantage in that the fluorescent layer is easily deteriorated. For this reason, the surface discharge type PDP is presently more common.

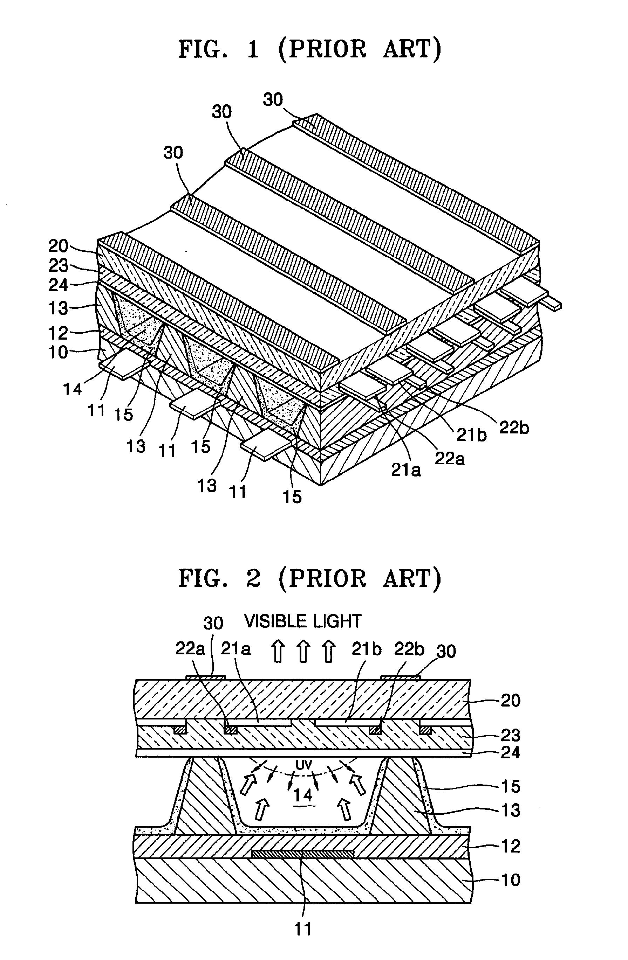

Figures 1 and 2 show the construction of a known surface discharge type PDP. In Figure 2, the upper substrate 20 is shown rotated by 90 degrees to aid understanding of the inner structure of the PDP.

Referring to Figures 1 and 2, the known PDP includes a lower substrate 10 and an upper substrate 20 facing each other.

On the upper surface of the lower substrate 10, a plurality of address electrodes 11 are arranged as stripes. The address electrodes 11 are covered by a first dielectric layer 12 (preferably white). On the first dielectric layer 12, a plurality of barrier ribs 13 having a predetermined spacing are formed. The space prevents electrical and optical cross-talk between discharge cells 14. On the inner surfaces of the discharge cells 14, which are partitioned by the barrier ribs 13, a red (R), green (G) and blue (B) fluorescent layer 15 having a predetermined thickness is applied thereto. The discharge cells 14 are filled with a discharge gas, which is typically a mixture of neon (Ne) and a small amount of xenon (Xe). This is generally used for plasma discharge.

The upper substrate 20 is a transparent substrate, which transmits visible light, and is preferably made of glass. The upper substrate 20 is coupled to the lower substrate 10. On the lower surface of the upper substrate 20, sustaining electrodes 21a and 21 b are formed in pairs and are formed perpendicular to the address electrodes 11. The sustaining electrodes 21a and 21b and are arranged as stripes. The sustaining electrodes 21a and 21b are formed of a transparent conductive material, such as indium tin oxide (ITO), which allows transmission of visible light. In order to reduce the resistance of the sustaining electrodes 21a and 21b, bus electrodes 22a and 22b are formed on the lower surface of the respective sustaining electrodes 21a and 21b. The bus electrodes 21a and 21b are made of a metal and have a width which is less than that of the sustaining electrodes 21a and 21b. The sustaining electrodes 21a and 21b and the bus electrodes 22a and 22b are covered with a transparent second dielectric layer 23. On the lower surface of the second dielectric layer 23, a protective layer 24 is formed. The protective layer 24 prevents the second dielectric layer 23 from damage caused by plasma sputtering. The protective layer 24 emits secondary electrons which lower the discharge voltages. The protective layer 24 is generally formed of magnesium oxide (MgO). A plurality of black stripes 30 are formed at a predetermined spacing. The black stripes 30 are parallel to the sustaining electrodes 21a and 21b to prevent external light from entering the panel.

The known PDP as above generally uses a cycle of two operations: address discharge and sustaining discharge. The address discharge occurs between the address electrode 11 and any one of the sustaining electrodes 21a and 21b. Thus, during the address discharge, wall charges are formed. The sustaining discharge is caused by a potential difference between the sustaining electrodes 21a and 21 b positioned at the discharge cells 14 in which the wall charges are formed. During the sustaining discharge, the florescent layer 15 of the corresponding discharge cell is excited by ultraviolet rays generated from the discharge gas, thus emitting visible light. The visible light emitted through the upper substrate 20 forms the image on the PDP.

However, when the known PDP as above is used in a bright room, external light enters the discharge cells 14. The external light lowers the bright room contrast and reduces the image display performance of the PDP.

The present invention provides a PDP with better brightness and bright room contrast by improving the structure of the upper substrate.

The present invention relates to a plasma display panel comprising a discharge cell operable to emit light.

A plasma display panel according to the present invention is characterised by a lenticular layer for focussing the light emitted by the cell, wherein the cell to lens ratio applicable to the cell is not 1:1.

Additional preferred and optional features are set forth in claims 2 to 5 appended hereto.

An embodiment of the present invention will now be described, by way of example only, and with reference to Figures 3 to 11 of the accompanying drawings, in which:
Figure 1 is a cutaway perspective view of a known surface discharge type PDP;
Figure 2 is a cross-sectional view illustrating the inner structure of the PDP of Figure 1;
Figure 3 is a cutaway perspective view of a PDP according to an embodiment of the present invention;
Figure 4 is a cross-sectional view illustrating the inner structure of the PDP of Figure 3;
Figure 5 is a cross-sectional view illustrating a modification of the PDP of Figure 3;
Figure 6 is a cutaway perspective view of a PDP according to another embodiment of the present invention;
Figure 7 is a cross-sectional view illustrating the inner structure of the PDP of Figure 6;
Figure 8 is a cross-sectional view illustrating a modification of the PDP of Figure 6;
Figure 9 is a cutaway perspective view of a PDP according to a further embodiment of the present invention;
Figure 10 is a cross-sectional view illustrating the inner structure of the PDP of Figure 9; and
Figure 11 is a cross-sectional view illustrating a modification of the PDP of Figure 9.

In the drawings, it should be understood that like reference numbers refer to similar features, structures, and elements.

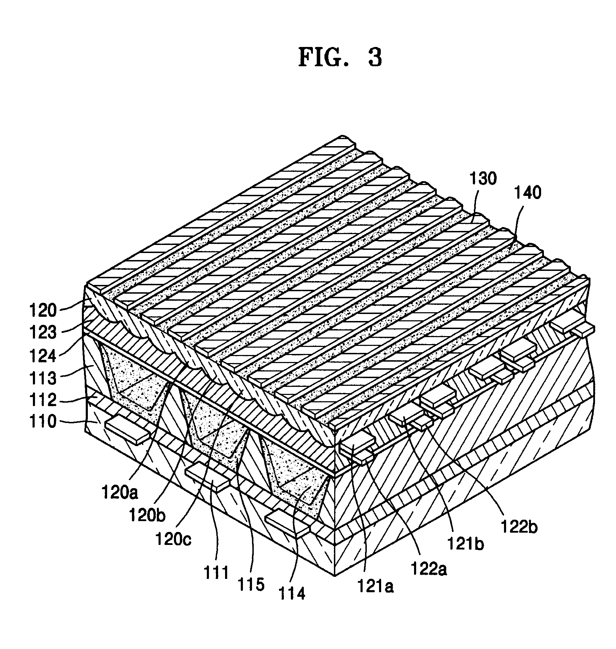

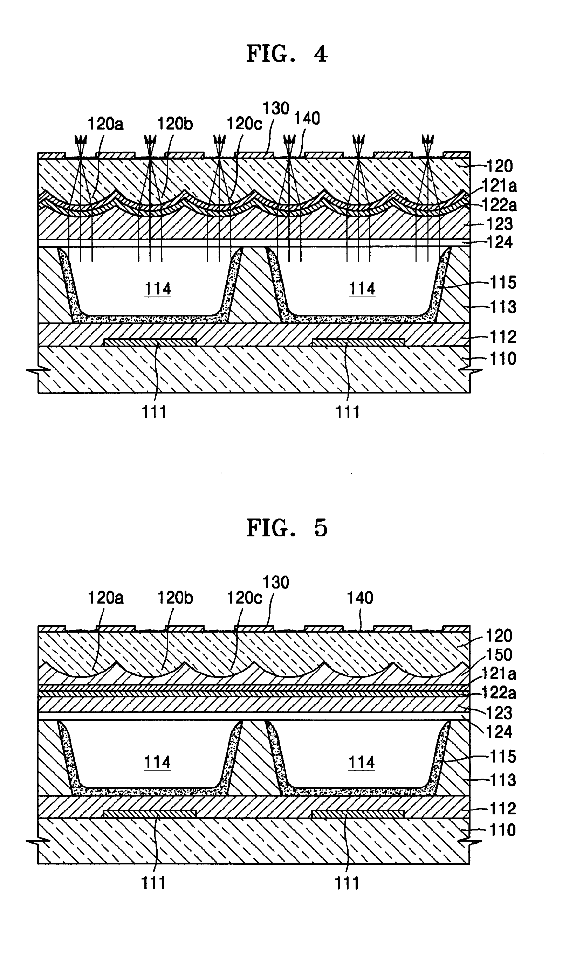

Referring to Figures 3 and 4, the PDP comprises a lower substrate 110 and an upper substrate 120, which are spaced apart by a predetermined amount. The lower substrate 110 and the upper substrate 120 face each other. The space between the lower substrate 110 and the upper substrate 120 corresponds to a discharge space in which plasma discharge occurs.

The lower substrate 110 is preferably formed of glass. A plurality of address electrodes 111 are formed in parallel with one another in stripes on the upper surface of the lower substrate 110. A first dielectric layer 112 is formed on the address electrodes 111 to cover the address electrodes 111 and the lower substrate 110. The first dielectric layer 112 is formed using a dielectric material (preferably white) having a predetermined thickness.

A plurality of barrier ribs 113 are formed in parallel and are spaced apart by a predetermined amount. The barrier ribs 113 are formed on the upper surface of the first dielectric layer 112. The barrier ribs 113 partition the discharge space between the lower substrate 110 and the upper substrate 120, thus defining discharge cells 114. The barrier ribs 113 prevent electrical and optical cross-talk between adjacent discharge cells 114, thus enhancing colour purity. A red (R), green (G) or blue (B) fluorescent layer 115 having a predetermined thickness is formed on the upper surface of the first dielectric layer 112 and the sides of the barrier ribs 113. This means that the PDP, as a whole, will be made of a number of discharge cells 114 having a red, green and blue fluorescent layer 115. The fluorescent layer 115 forms the inner walls of the discharge cells 114. The fluorescent layer 115 is excited by ultraviolet rays generated by the plasma discharge, thereby emitting visible light of a certain colour. The discharge cells 114 are preferably filled with a discharge gas, which is a mixture of neon (Ne) and a small amount of xenon (Xe), as is generally used for plasma discharge.

The upper substrate 120 is transparent, and is preferably formed of glass. A plurality of cylindrical lenses 120a, 120b and 120c are formed on the lower surface of the upper substrate 120. The cylindrical lenses 120a, 120b and 120c correspond to each of the discharge cells 114, and are formed in parallel with the address electrodes 111. It is preferable that the cylindrical lenses 120a, 120b and 120c are formed integrally with the upper substrate 120. This can be achieved when processing the lower surface of the upper substrate 120. As shown in Figure 4, the cylindrical lenses 120a, 120b and 120c focus the visible light generated in the discharge cells 114 and emit the visible light out of the PDP. Thus, the plurality of cylindrical lenses 120a, 120b and 120c, which corresponds to each of the discharge cells 114, reduce the loss of visible light generated in the discharge cells 114. Moreover, the lenses enhance light integrity, which further enhances the brightness of the PDP.

Although the present embodiment shows three cylindrical lenses 120a, 120b and 120c corresponding to each of the discharge cells 114, the number of cylindrical lenses corresponding to each of the discharge cells 114 may be changed to two or four or more.

On the lower surfaces of the cylindrical lenses 120a, 120b and 120c, first and second discharge electrodes 121a and 121b for sustaining discharge are formed in pairs. Thus, a pair of discharge electrodes 121a and 121b are formed for each discharge cell. The first and second discharge electrodes 121a and 121 b are formed perpendicularly to the address electrodes 111. The first and second discharge electrodes 121a and 121b are preferably formed of a transparent conductive material, such as indium tin oxide (ITO), in order to transmit the visible light generated in the discharge cells 114. On the lower surface of the first and second discharge electrodes 121a and 121b, first and second bus electrodes 122a and 122b, which are preferably made of metal, are formed. The first and second bus electrodes 122a and 122b are electrodes which decrease line resistance of the first and second discharge electrodes 121a and 121b. Preferably, the first and second bus electrodes 122a, 122b are narrower than the first and second discharge electrodes 121a and 121b.

A second dielectric layer 123 is formed on the lower surface of the cylindrical lenses 120a, 120b and 120c. The second dielectric layer 123 covers the first and second discharge electrodes 121a and 121b and the first and second bus electrodes 122a and 122b. The second dielectric layer 123 is formed by coating a preferably transparent dielectric material, having a predetermined thickness, on the lower surface of the upper substrate 120.

A protective layer 124 is formed on the lower surface of the second dielectric layer 123. The protective layer 124 prevents the second dielectric layer 123 and the first and second discharge electrodes 121a and 121b from being damaged by plasma sputtering. The protective layer 124 emits secondary electrons, thereby lowering discharge voltage. The protective layer 124 is preferably formed by coating the lower surface of the second dielectric layer 123 with a predetermined thickness of magnesium oxide (MgO).

An external light shielding member is provided on the upper surface of the upper substrate 120 to prevent external light from entering the discharge cells 114 through the upper substrate 120. The external light shielding member is preferably formed of a plurality of parallel stripes 130 (preferably black) on the upper surface of the upper substrate 120 spaced apart by a predetermined distance. The stripes 130 are preferably of a uniform width and located in parallel with the address electrodes 111 and the cylindrical lenses 120a, 120b and 120c. The stripes 130 are formed where no visible light is emitted from the discharge cells 114. Thus, when the stripes 130 are formed on the upper surface 140 of the upper substrate 120, the visible light generated by the discharge cells 114 is focused through the upper surface 140 of the upper substrate 120 as shown in Figure 4. The visible light is then diffused and emitted out of the PDP. Hence, since the stripes 130 cover more of the upper surface of the upper substrate 120 than in the known PDP, external light is more effectively prevented from entering the discharge cells 114. As a result, the bright room contrast of the PDP is enhanced. The stripes 130 may also include a conductive film for shielding electromagnetic interference (EMI).

Non-glare treatments are applied to portions of the upper surface 140 between the black stripes 130 to prevent external light from being reflected by the upper substrate 120.

In the PDP as above, when an address discharge occurs between the address electrode 111 and any one of the sustaining electrodes 121a and 121b, wall charges are formed. Thereafter, when an AC voltage is applied to the first and second discharge electrodes 121a and 121b, a sustaining discharge occurs inside the discharge cells 114 where the wall charges are formed. The sustaining discharge causes the discharge gases to generate ultraviolet rays, which excite the fluorescent layer 115 to generate visible light.

The visible light generated in the discharge cells 114 is focused onto the non-glare treated regions of the upper surface 140 by cylindrical lenses 120a, 120b and 120c. The light is then diffused and emitted out of the PDP. Thus, the loss of visible light generated in discharge cells 114 can be reduced and light integrity can be enhanced.

Moreover, the area covered by the stripes 130 formed on the upper surface of the upper substrate 120 is higher than in the known PDP, further enhancing the bright room contrast of the PDP.

Referring to Figure 5, a layer of preferably transparent material 150 is formed so as to cover the lower surfaces of the cylindrical lenses 120a, 120b and 120c. First and second discharge electrodes 121a and 121b are formed on the flat lower surface of the layer 150. First and second bus electrodes 122a and 122b are formed on the lower surfaces of the first and second discharge electrodes 121a and 121b. Also, a second dielectric layer 123 covering the first and second discharge electrodes 121a and 121b and the first and second bus electrodes 122a and 122b is formed on the lower surface of layer 150. Thus, the layer 150 aids the formation of the first and second discharge electrodes 121a and 121b and the first and second bus electrodes 122a and 122b.

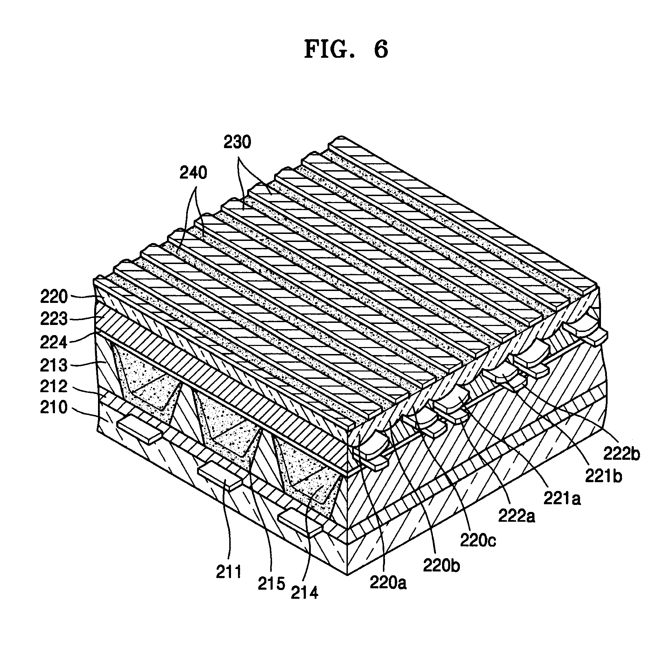

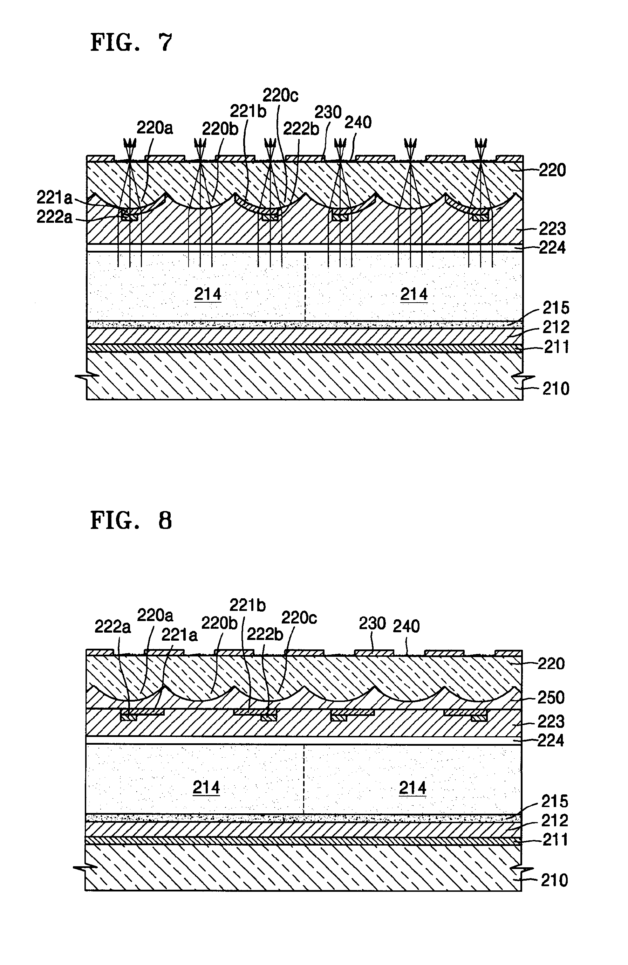

Referring to Figures 6 and 7, the PDP comprises a lower substrate 210 and an upper substrate 220 that are separated by a predetermined distance. A discharge space is formed between the lower substrate 210 and the upper substrate 220.

On the lower substrate 210, a plurality of address electrodes 211 and a first dielectric layer 212 are formed, preferably in this sequence.

A plurality of barrier ribs 213 are formed parallel to the address electrodes 211 and are spaced apart by a predetermined amount. The ribs 213 are formed on the first dielectric layer 212. The barrier ribs 213 partition the discharge space between the lower substrate 210 and the upper substrate 220, thereby defining discharge cells 214. A fluorescent layer 215 is formed on the upper surface of the first dielectric layer 212, and the side surfaces of the barrier ribs 213, thus forming inner walls of the discharge cells 214. The discharge cells 214 are preferably filled with a discharge gas.

A plurality of cylindrical lenses 220a, 220b and 220c are formed on the lower surface of the upper substrate 220. The cylindrical lenses 220a, 220b and 220c correspond to each of the discharge cells 214, and are formed perpendicular to the address electrodes 211. It is preferable that the cylindrical lenses 220a, 220b and 220c are formed integrally with the upper substrate 220. This is achieved in processing the lower surface of the upper substrate 220 in a suitable manner. As shown in Figure 7, the cylindrical lenses 220a, 220b and 220c focus the visible lights generated in the discharge cells 214. The focussed light is emitted from the PDP. Although the present embodiment shows three cylindrical lenses 220a, 220b and 220c corresponding to each of the discharge cells 214, the number of cylindrical lenses corresponding to each of the discharge cells 214 may be changed to two or four or more.

On the lower surfaces of the cylindrical lenses 220a, 220b and 220c, first and second discharge electrodes 221a and 221b are formed in pairs, one pair for each discharge cell 214. The discharge electrodes sustain a discharge and are formed perpendicular to the address electrodes 211. On the lower surface of the first and second discharge electrodes 221a and 221b, first and second bus electrodes 222a and 222b are formed. These are preferably made of metal.

A second dielectric layer 223 is preferably formed on the lower surface of the cylindrical lenses 220a, 220b and 220c, so as to cover the first and second discharge electrodes 221a and 221b and the first and second bus electrodes 222a and 222b. A protective layer 224 is formed on the lower surface of the second dielectric layer 223.

An external light shielding member is provided on the upper surface of the upper substrate 220 to prevent external light from entering the discharge cells 214 through the upper substrate 220. The external light shielding member is preferably formed of a plurality of parallel stripes 230 (preferably black) and are located on the upper surface of the upper substrate 220; each stripe 230 being spaced apart from one another by a predetermined amount. The stripes 230 are of constant width and are parallel with the cylindrical electrodes 220a, 220b and 220c. The stripes 230 are formed where no visible light is emitted by the discharge cells 214. Non-glare treatments are applied between the stripes 230. The stripes 230 may include a conductive film for shielding electromagnetic interference (EMI).

Referring to Figure 8, a transparent material layer 250 is formed to cover the lower surfaces of the cylindrical lenses 220a, 220b and 220c. First and second discharge electrodes 221a and 221b are preferably formed on the flat lower surface of the transparent material layer 250. First and second bus electrodes 222a and 222b are formed on the lower surfaces of the first and second discharge electrodes 221 a and 221b. Also, a second dielectric layer 223 is formed on the lower surface of the transparent material layer 250 to cover the first and second discharge electrodes 221a and 221b and the first and second bus electrodes 222a and 222b. The transparent material layer 250 aids in forming the first and second discharge electrodes 221a and 221b and the first and second bus electrodes 222a and 222b.

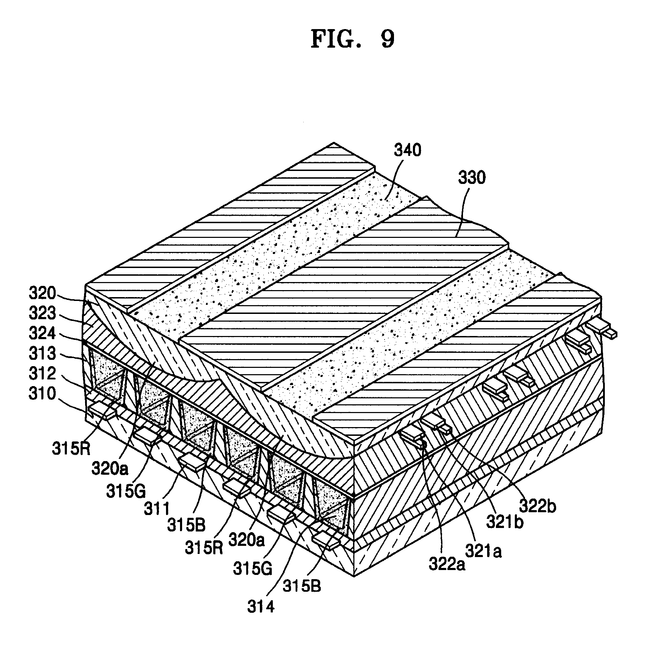

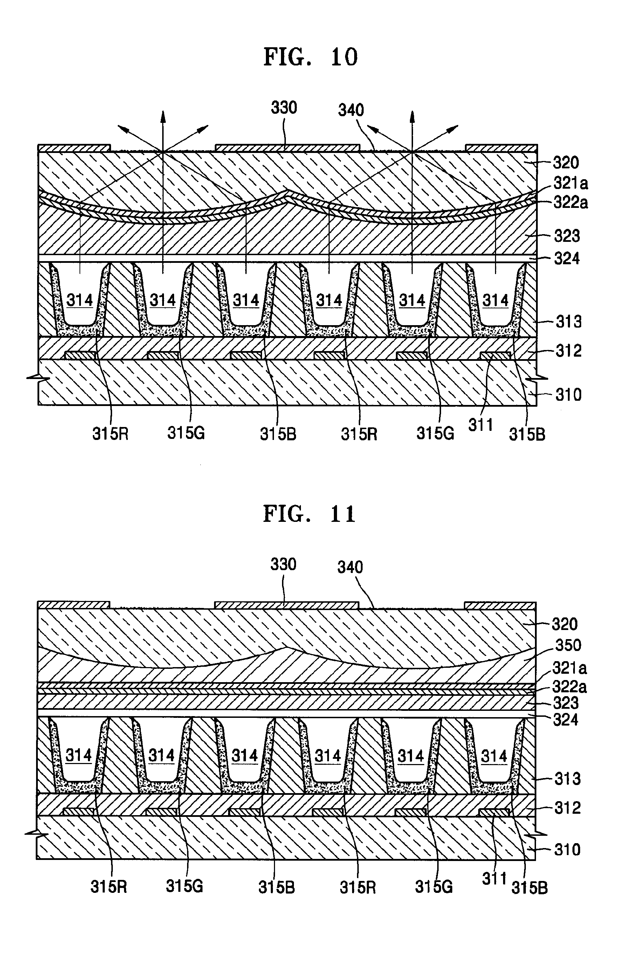

Referring to Figures 9 and 10, the PDP comprises a lower substrate 310 and an upper substrate 320. The lower and upper substrates are spaced apart from each other by a predetermined distance. A discharge space is formed between the lower substrate 310 and the upper substrate 320. On the lower substrate 310, a plurality of address electrodes 311 and a first dielectric layer 312 are formed, preferably in this order. A plurality of barrier ribs 313 are formed on the first dielectric layer 312 in parallel to the address electrodes 311. The ribs 312 are spaced apart from one another by a predetermined distance. The barrier ribs 313 partition the discharge space between the lower substrate 310 and the upper substrate 320, thereby defining discharge cells 314.

Red (R), green (G) and blue (B) fluorescent layers 315R, 315G and 315B are sequentially formed on the upper surface of the first dielectric layer 312, and side surfaces of the barrier ribs 313 forming the inner walls of the discharge cells 314. The discharge cells 314 are preferably filled with a discharge gas, which is a mixture of neon (Ne) and a small amount of xenon (Xe), as is generally used for plasma discharge.

A plurality of cylindrical lenses 320a are formed on the lower surface of the upper substrate 320. Each of the cylindrical lenses 320a correspond to a plurality of the respective discharge cells 314. Preferably, each of the cylindrical lenses 320a corresponds to one pixel of the PDP as shown in Figures 9 and 10. In other words, each of the cylindrical lenses 320a corresponds to three discharge cells 314 in which the red (R), green (G) and blue (B) fluorescent layers 315R, 315G and 315B are formed. It is preferable that the cylindrical lenses 320a are formed integrally with the upper substrate 320, which can be achieved during the processing of the lower surface of the upper substrate 320. As shown in Figure 10, the cylindrical lenses 320a focus the visible light generated in the three discharge cells 314 in which the red (R), green (G) and blue (B) fluorescent layers 315R, 315G and 315B are formed and emit the visible light out of the PDP. Thus, the cylindrical lenses 320a on the lower surface of the upper substrate 320, each correspond to one pixel. Moreover, the lenses reduce the loss of visible light generated by discharge which enhances the brightness of the PDP. Also, since each of the cylindrical lenses 320a is shared by three discharge cells 314, the processing of the cylindrical lenses 320a is simpler and the PDP can be less expensive to manufacture.

On the lower surfaces of the cylindrical lenses 320a, first and second discharge electrodes 321a and 321b for sustaining discharge are formed, in pairs, for each discharge cell 314. The first and second discharge electrodes 321a and 321b are formed perpendicular to the address electrodes 311. On the lower surface of the first and second discharge electrodes 321 a and 321 b, first and second bus electrodes 322a and 322b are formed. These are preferably made of metal. Also, a second dielectric layer 323 is formed on the lower surface of the cylindrical lenses 320a to cover the first and second discharge electrodes 321a and 321b and the first and second bus electrodes 322a and 322b. A protective layer 324 is formed on the lower surface of the second dielectric layer 323.

An external light shielding member is provided on the upper surface of the upper substrate 320 to prevent external light from entering the discharge cells 314 through the upper substrate 320. The external light shielding member is preferably formed of a plurality of parallel stripes 330 (preferably black) on the upper surface of the upper substrate 320. These are spaced apart by a predetermined amount. The stripes 330 are preferably of a uniform width and are parallel with the address electrodes 311 and the cylindrical electrodes 320a. The stripes 330 are formed in a location where no visible light is emitted by the discharge cells 314. Non-glare treatments are applied to portions between the black stripes 330. The stripes 330 prevent external light from entering the discharge cells 314, thereby enhancing the bright room contrast of the PDP. The stripes 330 may include a conductive film for shielding electro magnetic interference (EMI).

Referring to Figure 11, a transparent material layer 350 is formed to cover the lower surfaces of the cylindrical lenses 320a. First and second discharge electrodes 321a and 321b are formed on the flat lower surface of the transparent material layer 350. First and second bus electrodes 322a and 322b are formed on the lower surfaces of the first and second discharge electrodes 321a and 321b. Also, a second dielectric layer 323 is formed on the lower surface of the transparent material layer 350, to cover the first and second discharge electrodes 321a and 321 b and the first and second bus electrodes 322a and 322b. Thus, the transparent material layer 350 aids in forming the first and second discharge electrodes 321a and 321b and the first and second bus electrodes 322a and 322b.

As described above, the PDP made according to embodiments of the present invention has the following features:
First, a plurality of cylindrical lenses correspond to each discharge cell, reducing the loss of visible light generated in the discharge cells and enhancing the light integrity and brightness of the PDP.

Second, black stripes can cover more of the upper surface of the upper substrate than in the known PDP, to more effectively prevent external light from entering the discharge cells, and thus, enhance the bright room contrast of the PDP.

Third, one cylindrical lens corresponds to two or more discharge cells, making the formation of the cylindrical lenses 320a simpler, so that the PDP can be less expensive to manufacture.

While the present invention has been particularly shown and described with reference to exemplary embodiments thereof, it will be understood by those of ordinary skill in the art that various changes in form and details may be made therein without departing from the present invention as defined by the following claims. For example, although the aforementioned embodiments show and describe an AC type surface discharge PDP, the present invention is not limited thereto but can be applied to a DC type PDP or a facing discharge PDP.

## Claims

1. A plasma display panel comprising:
a discharge cell (114, 214) operable to emit light **characterised by**
a lenticular layer (120, 220) for focussing the light emitted by the cell (114, 214), wherein the cell (114, 214) to lens ratio applicable to the cell is not 1 : 1.

2. A plasma display panel according to claim 1, wherein a single lens (120a, 120b, 120c) in the lenticular layer (120, 220) extends across an area formed from a plurality of cells (114, 214).

3. A plasma display panel according to claim 1, wherein a plurality of lenses (120a, 120b, 120c) in the lenticular layer (120, 220) extend across a cell (114, 214).

4. A plasma display panel according to any one of claims 1 to 3, wherein the lenticular layer (120, 220) comprises cylindrical lenses.

5. A plasma display panel according to any one of claims 1 to 4, wherein the cell (114, 214) comprises a channel extending along the panel.

6. A plasma display panel comprising:
a lower substrate and an upper substrate, spaced apart by a predetermined distance to define a discharge space therebetween;
a plurality of barrier ribs between the lower substrate and the upper substrate, partitioning the discharge space to form a plurality of discharge cells;
a plurality of address electrodes formed in parallel on the upper surface of the lower substrate;
a plurality of discharge electrodes formed at an angle to the address electrodes on the lower surface of the upper substrate;
a fluorescent layer formed on the inner walls of the discharge cells; and
an external light shielding member formed on the upper substrate, for preventing external light from entering the discharge cells,
wherein the upper substrate has a plurality of cylindrical lenses, corresponding to each of the discharge cells, formed on the lower surface of the upper substrate, to focus visible light generated by discharge and emit the visible light out of the plasma display panel.

7. The plasma display panel of claim 6, wherein the cylindrical lenses are formed integral with the upper substrate.

8. The plasma display panel of claim 6, wherein the cylindrical lenses are formed parallel to the address electrodes.

9. The plasma display panel of claim 8, wherein the external light shielding member comprises a plurality of stripes formed parallel to the address electrodes on the upper surface of the upper substrate.

10. The plasma display panel of claim 9, wherein the stripes are formed where no visible lights are emitted by the discharge cells.

11. The plasma display panel of claim 9, wherein the stripes comprise a conductive film for shielding electromagnetic interference.

12. The plasma display panel of claim 9, wherein the upper surface of the upper substrate between the stripes is non-glare treated.

13. The plasma display panel of claim 6, wherein the cylindrical lenses are formed perpendicular to the address electrodes.

14. The plasma display panel of claim 13, wherein the external light shielding member comprises a plurality of stripes formed perpendicular to the address electrodes on the upper surface of the upper substrate.

15. The plasma display panel of claim 14, wherein the stripes are formed where no visible lights is emitted by the discharge cells.

16. The plasma display panel of claim 14, wherein the stripes comprise a conductive film for shielding electromagnetic interference.

17. The plasma display panel of claim 14, wherein the upper surface of the upper substrate between the stripes is non-glare treated.

18. The plasma display panel of claim 6, wherein the discharge electrodes are formed on the lower surfaces of the cylindrical lenses.

19. The plasma display panel of claim 6, wherein a transparent material layer is formed to cover the lower surfaces of the cylindrical lenses.

20. The plasma display panel of claim 19, wherein the discharge electrodes are formed on the lower surface of the transparent material layer.

21. The plasma display panel of claim 6, wherein the barrier ribs are formed parallel to the address electrodes.

22. The plasma display panel of claim 6, wherein bus electrodes are formed on the lower surfaces of the discharge electrodes.

23. The plasma display panel of claim 6, wherein a first dielectric layer covering the address electrodes is formed on the upper surface of the lower substrate.

24. The plasma display panel of claim 23, wherein a second dielectric layer covering the discharge electrodes is formed on the lower surface of the upper substrate.

25. The plasma display panel of claim 24, wherein a protective layer is formed on the lower surface of the second dielectric layer.

26. A plasma display panel comprising:
a lower substrate and an upper substrate, spaced apart from each other by a predetermined distance to define a discharge space therebetween;
a plurality of barrier ribs between the lower substrate and the upper substrate, partitioning the discharge space to form a plurality of discharge cells;
a plurality of address electrodes formed in parallel on the upper surface of the lower substrate;
a plurality of discharge electrodes formed at an angle to the address electrodes on the lower surface of the upper substrate;
a fluorescent layer formed on the inner walls of the discharge cells; and
an external light shielding member formed on the upper substrate to prevent external light from entering the discharge cells,
wherein the upper substrate has cylindrical lenses, each corresponding to two or more discharge cells, formed on the lower surface of the upper substrate to focus visible light generated by discharge and emit the visible light out of the plasma display panel.

27. The plasma display panel of claim 26, wherein each of the cylindrical lenses corresponds to three discharge cells forming one pixel.

28. The plasma display panel of claim 26, wherein the cylindrical lenses are formed parallel to the address electrodes.

29. The plasma display panel of claim 26, wherein the cylindrical lenses are formed integral with the upper substrate.

30. The plasma display panel of claim 26, wherein the discharge electrodes are formed on the lower surfaces of the cylindrical lenses.

31. The plasma display panel of claim 26, wherein a transparent material layer is formed to cover the lower surfaces of the cylindrical lenses.

32. The plasma display panel of claim 31, wherein the discharge electrodes are formed on the lower surface of the transparent material layer.

33. The plasma display panel of claim 26, wherein the external light shielding member comprises a plurality of stripes formed parallel to the address electrodes on the upper surface of the upper substrate.

34. The plasma display panel of claim 33, wherein the stripes are formed where no visible lights is emitted by the discharge cells.

35. The plasma display panel of claim 33, wherein the stripes comprise a conductive film for shielding EMI.

36. The plasma display panel of claim 33, wherein the upper surface of the upper substrate between the stripes is non-glare treated.

37. The plasma display panel of claim 26, wherein the barrier ribs are formed parallel to the address electrodes.

38. The plasma display panel of claim 26, wherein bus electrodes are formed on the lower surfaces of the discharge electrodes.

39. The plasma display panel of claim 26, wherein a first dielectric layer covering the address electrodes is formed on the upper surface of the lower substrate.

40. The plasma display panel of claim 39, wherein a second dielectric layer covering the discharge electrodes is formed on the lower surface of the upper substrate.

41. The plasma display panel of claim 40, wherein a protective layer is formed on the lower surface of the second dielectric layer.
